Europäisches Patentamt

European Patent Office

Office européen des brevets

(19)

(11) **EP 0 932 849 B1**

(12) **FASCICULE DE BREVET EUROPEEN**

(45) Date de publication et mention
de la délivrance du brevet:
**02.01.2002 Bulletin 2002/01**

(51) Int Cl.[7]: **G02F 1/1335**, G02B 5/30,
G02B 5/32

(21) Numéro de dépôt: **97909385.3**

(22) Date de dépôt: **10.10.1997**

(86) Numéro de dépôt international:
**PCT/FR97/01811**

(87) Numéro de publication internationale:
**WO 98/16866 (23.04.1998 Gazette 1998/16)**

(54) **PANNEAU DE VISUALISATION AVEC COMPENSATION PAR FILMS BIREFRINGENTS HOLOGRAPHIQUES**

BILDSCHIRM MIT KOMPENSATION DURCH DOPPELBRECHENDE HOLOGRAPHISCHE FILME

DISPLAY PANEL WITH COMPENSATION BY HOLOGRAPHIC BIREFRINGENT FILMS

(84) Etats contractants désignés:
**DE FR GB NL**

(30) Priorité: **15.10.1996 FR 9612559**

(43) Date de publication de la demande:
**04.08.1999 Bulletin 1999/31**

(73) Titulaires:
• **Thales**
**75008 Paris (FR)**
• **THALES AVIONICS S.A.**
**78141 Vélizy Villacoublay Cédex (FR)**

(72) Inventeurs:
• **BIGNOLLES, Laurent,Thomson-CSF S.C.P.I.**
**F-94117 Arcueil Cedex (FR)**
• **DE LAUZUN, Frédéric,Thomson-CSF S.C.P.I.**
**F-94117 Arcueil Cedex (FR)**
• **MORBIEU, Bertrand,Thomson-CSF S.C.P.I.**
**F-94117 Arcueil Cedex (FR)**
• **GEORGES, Laurent,Thomson-CSF S.C.P.I.**
**F-94117 Arcueil Cedex (FR)**
• **LEHUREAU, Jean-Claude,Thomson-CSF S.C.P.I.**
**F-94117 Arcueil Cedex (FR)**

(74) Mandataire: **Guérin, Michel et al**
**Thomson-CSF Propriété Intellectuelle, 13, Avenue du Président Salvador Allende**
**94117 Arcueil Cédex (FR)**

(56) Documents cités:
**EP-A- 0 622 656** **US-A- 5 196 953**
**US-A- 5 528 400**

• **JINN-CHOU YOO ET AL.: "Novel compensator with grating structure for twisted nematic liquid crystal display applications" CONFERENCE RECORD ON THE 1994 INTERNATIONAL DISPLAY RESEARCH CONFERENCE AND INTERNATIONAL WORKSHOP ON ACTIVE-MATRIX LCDS AND DISPLAY MATERIALS, MONTEREY, 10 octobre 1994, SANTA ANA, USA, pages 217-219, XP000677257 cité dans la demande**
• **C.GU ET AL.: "Form birefringence of layered media and volume gratings" JOURNAL OF THE OPTICAL SOCIETY OF AMERICA B, vol. 12, no. 6, juin 1995, pages 1094-1099, XP002033797**
• **G.CAMPBELL ET AL.: "Effective-medium theory of sinussoidally modulated volume holograms" JOURNAL OF THE OPTICAL SOCIETY OF AMERICA, A, vol. 12, no. 5, mai 1995, pages 1113-1117, XP002033798**
• **PATENT ABSTRACTS OF JAPAN vol. 013, no. 080 (P-832), 23 février 1989 -& JP 63 262678 A (FUJITSU LTD), 28 octobre 1988,**
• **CHAO W ET AL: "Optical birefringence of volume photopolymer holograms" PROCEEDINGS OF THE SPIE, vol. 2885, 4 novembre 1996, pages 60-68, XP000677272**

## Description

La présente invention concerne les dispositifs d'affichage électrooptiques, et plus précisément les panneaux à cristaux liquides, utilisés en transmission, en réflexion, ou même en projection sur un écran.

La plupart des panneaux à cristaux liquides souffrent d'un inconvénient majeur qui est l'angle de vue limité sous lequel on peut les observer : dès qu'on s'éloigne de la normale à la surface du panneau, le contraste entre le blanc et le noir diminue considérablement et détériore l'image présentée.

La présente invention a pour but de proposer des solutions techniques nouvelles pour permettre d'observer le panneau avec un contraste satisfaisant sous un angle de vue suffisamment écarté de la normale.

Dans ce qui suit, on s'intéressera principalement aux panneaux dans lesquels le cristal liquide est du type nématique en hélice (ou nématique "twisté"), et est placé entre deux polariseurs croisés, de sorte que la lumière est transmise en l'absence d'excitation du cristal par un champ électrique et est au contraire interrompue en présence d'un champ électrique. L'invention pourrait cependant être utilisée dans d'autres types de panneaux, et notamment dans une configuration à polariseurs parallèles où la lumière est interrompue en l'absence d'excitation électrique.

On reviendra plus loin sur l'origine du défaut de contraste sous incidence non nulle, mais d'ores et déjà on peut dire que ce défaut de contraste vient de la biréfringence naturelle du matériau constituant le cristal liquide. Le principe même de fonctionnement du cristal liquide repose sur l'anisotropie diélectrique des molécules et sur la biréfringence qui en résulte. L'anisotropie diélectrique permet d'orienter les molécules par un champ électrique; la biréfringence modifie la polarisation de la lumière. L'action combinée de ces propriétés est très efficace sur les rayons lumineux qui traversent le panneau perpendiculairement à la surface, mais elle est beaucoup moins efficace pour les rayons d'incidence oblique. Il en résulte en général un contraste beaucoup moins bon dès que l'observateur observe une cellule du panneau sous un angle de vue non perpendiculaire au panneau.

Pour essayer de remédier à ce défaut, on a déjà proposé, dans la technique antérieure d'associer à la structure de base du panneau à cristal liquide des structures qui tendent à compenser les variations de biréfringence en fonction de l'angle d'incidence.

Ces structures reposent

- sur une analyse de l'action biréfringente du cristal liquide dans l'état excité (en présence d'un champ électrique),
- sur une estimation des retards de phase introduits entre les deux composantes de polarisation de la lumière par la biréfringence du cristal liquide en fonction de l'angle de vue,
- et sur l'insertion de films de compensation qui introduisent un déphasage si possible inverse du déphasage estimé dans le cristal liquide.

Diverses solutions ont été décrites, donnant plus ou moins satisfaction, et la présente invention a pour but de proposer une nouvelle solution technique à ce problème.

Dans les solutions techniquement les plus avancées, on propose d'utiliser un film de compensation réalisé à partir d'un matériau moléculaire qui est optiquement un milieu uniaxe négatif (on reviendra plus loin sur la définition d'un tel milieu), car globalement on peut estimer que le cristal liquide se comporte comme un milieu uniaxe positif, et par conséquent une compensation par un milieu uniaxe négatif est la solution a priori la plus appropriée.

Le brevet EP-A-0 576 342 propose un milieu de compensation uniaxe négatif d'axe incliné par rapport au plan du panneau.

Le brevet EP-A-0 646 829 propose d'utiliser deux milieux uniaxes négatifs inclinés.

Le brevet EP-A-350 383 propose également un ou deux films biréfringents négatifs.

Le brevet EP-A-349 900 propose une compensation par deux films uniaxes positifs d'axes situés dans le plan du panneau.

Dans toutes ces solutions, la difficulté est de réaliser physiquement des films de compensation qui ont réellement les propriétés de biréfringence désirées. Les techniques connues sont des techniques de dépôt, d'étirement de films, de polymérisation sous champ électrique ou sous illumination ultraviolette.

Le brevet EP-A- 0 622 656 propose un dépôt par croissance d'un matériau biréfringent sur une surface à microprismes obliques.

Le brevet US-A- 5 528 400 propose d'utiliser comme film biréfringent un matériau discotique déposé sur une couche d'orientation elle-même déposée sur un substrat.

Dans le cas d'une compensation par un film d'axe optique perpendiculaire au plan du film, on a envisagé de réaliser la biréfringence par superposition de couches transparentes minces d'indice optique alternés; le brevet US 5 196 953 décrit une telle solution. Par analogie, Jinn-Chou Yoo et Han-Ping D. Shieh ont proposé de réaliser virtuellement cette structure de couches planes d'indices alternés sous forme d'un hologramme de volume qui reconstitue des variations d'indice identiques à celles de la superposition de couches planes. Ceci est exposé dans l'article intitulé "Novel Compensator with grating structure for twisted nematic liquid crystal display applications" issu de "Conference record on the 1994 International Display Research Conference and International Workshop on Active-Matrix LCD's and Display Materials, Monterey".

Par ailleurs l'article de Cl. GU et P. YEH "Form birefringence of layered media and volume grating" dans le "Journal of Optical Society of America" B/Vol. 12, N° 6, juin 1995, pages 1094-1099, mentionne des considérations d'ordre théorique sur les calculs d'indices optiques dans les milieux à biréfringence induite par des variations d'indice en volume.

La présente invention propose une solution nouvelle qui consiste à utiliser comme film biréfringent de compensation pour un dispositif d'affichage électrooptique, un hologramme de volume dans lequel on a inscrit un motif de franges d'interférences donnant au film des propriétés de biréfringence, les franges d'interférence faisant un angle non nul avec le plan du film pour produire une biréfringence d'axe optique non perpendiculaire au plan du film, tendant à compenser les effets néfastes de la biréfringence naturelle des éléments électrooptiques. On utilise donc ici les hologrammes de volume non pas pour leur aptitude à simuler une superposition de couches minces, mais pour leurs propriétés de biréfringence dans une direction choisie indépendante de l'orientation du plan du film.

On notera que les hologrammes de volume sinusoïdaux (variations d'indice sinusoïdales en franges parallèles) ont été étudiés récemment d'un point de vue scientifique et on a mis en évidence leur propriété de biréfringence artificielle pour des longueurs d'onde largement supérieures au pas des franges. La présente invention propose une application de cette découverte à la compensation de la biréfringence des panneaux à cristaux liquides, notamment en vue de l'amélioration de l'angle de vue sous lequel on peut observer le panneau avec un contraste satisfaisant.

Contrairement à l'usage courant des hologrammes, consistant à utiliser la diffraction de la lumière par des franges d'interférence, on utilise ici des franges espacées d'un pas plus petit que la longueur d'onde de la lumière qui les traverse. Ces franges constituent des hologrammes non diffractants pour la lumière d'utilisation du cristal liquide.

Typiquement, les franges sont créées par des interférences en lumière ultraviolette, dans un matériau photosensible en ultraviolet, alors que le panneau est destiné à être observé en lumière visible (notamment en lumière verte).

Comme on le verra, le réseau de franges crée, dans un axe perpendiculaire au réseau, un indice moyen plus faible que l'indice normal du matériau. Il en résulte donc naturellement un milieu biréfringent uniaxe négatif dont l'axe optique induit est perpendiculaire au plan des franges (supposées planes, au moins localement).

On peut alors utiliser l'invention pour réaliser des films biréfringents uniaxes négatifs d'axe incliné par rapport au plan du film, en enregistrant des franges en plans obliques. L'invention est particulièrement intéressante dans ce dernier cas car il n'est pas facile de réaliser des matériaux d'axe optique incliné en utilisant des méthodes purement mécaniques ou chimiques. La méthode optique d'enregistrement de franges inclinées devrait s'avérer beaucoup plus intéressante d'un point de vue industriel.

Bien que le film créé soit par nature uniaxe négatif, on peut cependant, d'une manière inattendue, réaliser par la même méthode un film de compensation uniaxe positif. Pour cela, on peut enregistrer dans le même film au moins deux réseaux de franges, indépendants, définissant deux axes optiques différents (de préférence deux axes perpendiculaires). Si la modulation d'indice est la même dans ces deux axes, c'est l'indice normal du matériau qui devient indice extraordinaire, supérieur aux indices induits dans les deux axes de modulation. Le matériau devient donc uniaxe positif, et ceci dans n'importe quelle direction.

Dans une variante de réalisation, si on veut compenser la biréfringence à l'aide d'un milieu optique biaxe, on peut enregistrer dans le même film deux réseaux de franges correspondant à deux axes optiques différents, mais avec des taux de modulation différents. La superposition des deux réseaux croisés définit l'équivalent d'un milieu biaxe mais ne nécessite qu'un seul film.

Dans une réalisation particulièrement simple, on peut réaliser une structure de compensation comprenant la superposition d'un film holographique à biréfringence induite uniaxe négative d'axe perpendiculaire au plan du film (franges parallèles au plan du film), et d'un film holographique à biréfringence induite uniaxe négative d'axe incliné par rapport au film et par rapport à la normale au film (franges obliques par rapport au plan du film).

D'autres caractéristiques et avantages de l'invention apparaîtront à la lecture de la description détaillée qui suit et qui est faite en référence aux dessins annexés dans lesquels :

- la figure 1 représente schématiquement une cellule à cristal liquide dans l'état non activé et dans l'état activé;
- la figure 2 représente une modélisation de la cellule;
- la figure 3 représente les orientations des ellipsoïdes d'indice du modèle choisi;
- la figure 4 représente un panneau avec une structure de compensation selon l'invention;
- la figure 5 représente un exemple de procédé de réalisation d'un film holographique à franges inclinées.

L'invention sera expliquée à propos d'un exemple particulier qui est une cellule à cristal liquide nématique twistée.

Pour mieux comprendre l'invention, on fait les quelques rappels ci-dessous.

Les cristaux liquides nématiques twistés sont des milieux optiques biréfringents. Un milieu biréfringent est un milieu optique anisotrope dans lequel les différentes polarisations de la lumière ne se propagent pas toutes à la même vitesse, c'est-à-dire que l'indice optique vu par la lumière n'est pas le même pour toutes les polarisations. Ce milieu induit donc un déphasage différent pour les différentes polarisations. Comme la polarisation de la lumière est définie par le déphasage entre les composantes du champ électromagnétique selon deux axes orthogonaux, cela signifie que le milieu biréfringent modifie globalement la polarisation de la lumière incidente.

Mais du fait que la biréfringence est liée à la structure moléculaire, un milieu biréfringent possède en général des axes propres qui ne modifient pas la polarisation de la lumière. Si la lumière arrive polarisée selon un de ces axes, elle ressort avec la même polarisation. Si elle arrive avec une polarisation qui n'est pas dans un des axes propres, la polarisation est modifiée par le milieu.

Les propriétés optiques d'un milieu biréfringent peuvent être représentées symboliquement par un modèle mathématique qui est l'ellipsoïde des indices : c'est un ellipsoïde dans un repère constitué par trois axes propres du milieu; les longueurs d'axes de l'ellipsoïde sont les indices de propagation de la lumière supposée polarisée selon chacun de ces axes : une lumière polarisée selon un des axes de l'ellipsoïde verra sa polarisation inchangée et subira un indice de propagation correspondant à la longueur de cet axe.

Les milieux biréfringents sont dits uniaxes si l'ellipsoïde est de révolution, c'est-à-dire qu'il y a deux axes de polarisation orthogonaux pour lesquels la lumière se propage avec le même indice $n_o$ dit indice ordinaire et un troisième axe, dit axe extraordinaire ou axe optique, pour lequel elle se propage avec un indice différent $n_e$ dit indice extraordinaire. L'écart entre les indices est très faible, par exemple de 0,1%, mais cela suffit pour induire des modifications de polarisation très importantes. Les milieux sont biaxes si l'ellipsoïde n'est pas de révolution, c'est-à-dire si les trois axes propres orthogonaux ont trois indices différents.

Dans un milieu uniaxe traversé sous une incidence quelconque, la lumière peut être divisée selon deux composantes de polarisation orthogonales dont l'une voit toujours un indice $n_o$ et l'autre voit un indice n qui dépend de l'incidence et qui est compris entre $n_o$ et $n_e$ (n = ne si l'incidence est perpendiculaire à l'axe optique, n = $n_o$ si elle est parallèle à l'axe optique).

Si l'indice extraordinaire $n_e$ est supérieur à l'indice ordinaire $n_o$, le milieu est dit uniaxe positif. L'ellipsoïde est allongé en forme de cigare. L'axe extraordinaire est un axe lent.

Si au contraire l'indice extraordinaire $n_e$ est inférieur à l'indice ordinaire $n_o$, le milieu est dit uniaxe négatif. L'ellipsoïde est aplati en forme de coussin. L'axe extraordinaire est un axe rapide.

Pour élaborer la structure de compensation d'une cellule à cristal liquide, dont les effets de biréfringence sont très complexes, il faut d'abord essayer de modéliser la cellule. La cellule modélisée est ici une cellule nématique twistée.

Le matériau constituant la cellule à cristal liquide est fondamentalement un milieu biréfringent uniaxe positif, du fait de la structure allongée des molécules qui le composent.

On rappelle qu'une cellule nématique twistée comprend une couche mince de cristal liquide qui possède un état non activé (pas de champ électrique) dans lequel les molécules du cristal restent toutes parallèles au plan de la couche mince, et un état activé dans lequel un champ électrique perpendiculaire au plan de la couche mince tend à orienter les molécules perpendiculairement au plan de la couche mince.

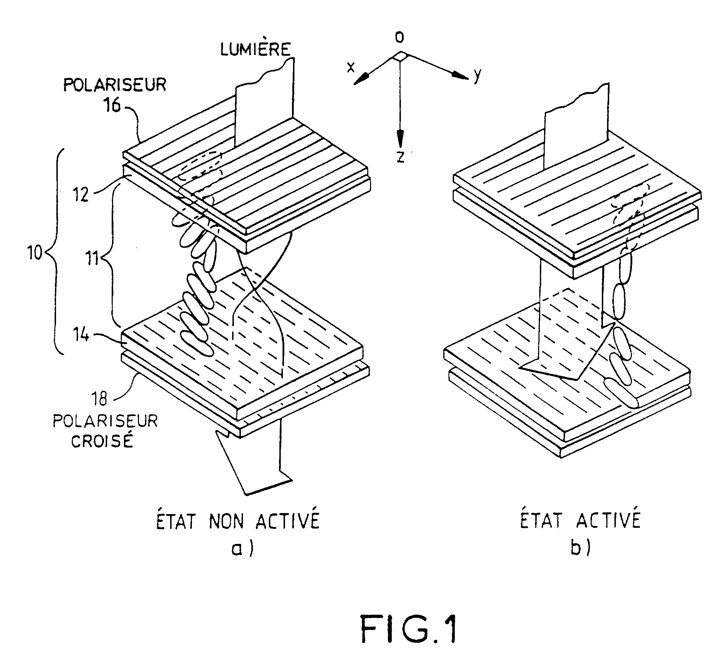

La figure 1 représente schématiquement cette structure moléculaire. Une couche mince de cristal liquide 10 est placée entre deux parois transparentes 12 et 14 qui ont été traitées, en général par frottement, pour que les molécules tendent naturellement à s'orienter dans une direction déterminée parallèlement aux parois. La direction pour la paroi 12 est perpendiculaire à la direction pour la paroi 14. L'interaction entre les molécules produit alors au repos une structure stratifiée hélicoïdale dans laquelle les molécules restent parallèles au plan de la couche mince mais tournent progressivement de 90° entre les deux parois.

Un polariseur d'entrée 16 ne laisse entrer dans la cellule qu'une seule direction de polarisation de la lumière. Un polariseur de sortie 18 ne laisse sortir de la cellule qu'une seule direction de polarisation. Les parois de la cellule sont revêtues d'électrodes transparentes pour permettre l'activation de la cellule, c'est-à-dire l'application d'un champ électrique perpendiculaire à la couche mince.

Dans cet exemple, les polariseurs sont parallèles aux directions de frottement pour laisser passer uniquement la polarisation de lumière parallèle à l'orientation des molécules adjacentes aux parois. On notera que les parois pourraient cependant être frottées perpendiculairement aux directions des polariseurs sans changer le principe. Elles peuvent également être frottées selon d'autres angles, par exemple à 45° des directions des polariseurs.

Quand on parle d'orientation des molécules, il s'agit de l'orientation en termes d'anisotropie optique, c'est-à-dire qu'on considère l'orientation de l'axe optique pour les molécules d'un milieu considéré comme uniaxe : on ne distinguera pas dans la suite la notion d'orientation des molécules et la notion d'orientation de l'axe optique.

Dans l'état non activé (figure 1a), la cellule reçoit la lumière avec la polarisation imposée par le polariseur d'entrée 16; elle fait progressivement tourner de 90° cette polarisation, et la lumière sortante, avec sa polarisation tournée à 90°, sort librement à travers le polariseur 18 qui est croisé avec le polariseur 16. Des structures avec polariseurs parallèles et non croisés existent aussi et on comprendra qu'elles fonctionnent d'une manière opposée.

Dans l'état activé (figure 1b), les molécules tendent à s'orienter verticalement, c'est-à-dire perpendiculairement aux parois de la cellule. Elles ne font plus tourner de 90° la polarisation de la lumière incidente. La polarisation d'entrée, conférée par le polariseur 16, tend au contraire à subsister à la sortie du milieu optique et rencontre le polariseur croisé 18 qui ne la laisse pas passer.

Le fonctionnement est le plus efficace quand l'incidence de la lumière est normale au plan de la couche mince de cristal liquide.

Mais pour des rayons obliques, les molécules orientées verticalement par le champ électrique exercent un effet de biréfringence important de sorte que la polarisation est quand même modifiée. Une fraction de la lumière passe dans le polariseur de sortie, réduisant le contraste entre l'état excité et l'état non excité.

D'autre part, dans la réalité, la structure hélicoïdale ne disparaît pas complètement au profit de la structure verticale. Les molécules adjacentes aux parois tendent à rester orientées dans la direction privilégiée qui leur est conférée naturellement par le traitement des parois. La structure résultante est donc un mélange entre un résidu de structure hélicoïdale et un ensemble de molécules orientées perpendiculairement au plan de la couche mince. Les molécules s'orientent progressivement de l'horizontale vers la verticale puis reviennent progressivement à l'horizontale, tout en tournant progressivement de 90° dans le plan horizontal.

Cette structure présente des propriétés de biréfringence complexes et induit des variations de polarisation qui dépendent également de l'angle d'incidence des rayons lumineux à travers la couche; un des buts de l'invention est d'en minimiser les effets négatifs.

On le fait selon l'invention en utilisant des films de compensation transparents dans lesquels on a enregistré des hologrammes de volume induisant une biréfringence artificielle désirée.

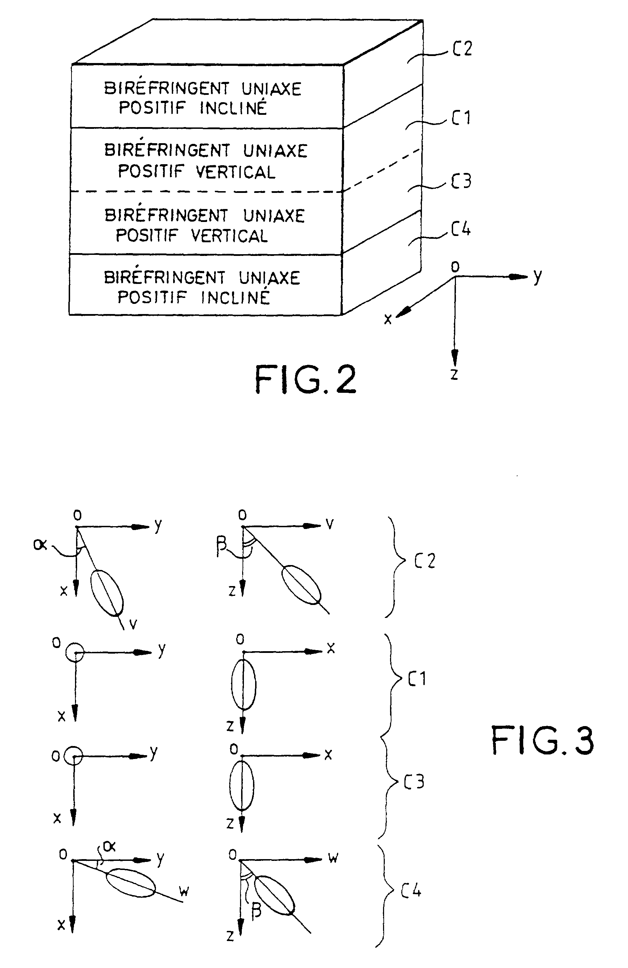

On peut modéliser la cellule, dans son état activé, par trois zones successives de biréfringences homogènes, qui sont respectivement une zone centrale où les ellipsoïdes de biréfringence sont considérés comme verticaux, et deux zones latérales où les ellipsoïdes sont considérés comme tous orientés en moyenne obliquement par rapport à la verticale et éventuellement par rapport aux directions de frottement des parois. Par symétrie, on peut même subdiviser la zone centrale en deux zones identiques. La figure 2 schématise ce modèle symétrique avec successivement :

- une zone C2 de milieu uniaxe positif, d'axe extraordinaire incliné par rapport à la verticale et par rapport à la direction d'orientation des molécules sur la première paroi;
- une zone C1 de milieu uniaxe positif, d'axe extraordinaire vertical,
- une zone C3, identique à la zone C1, de milieu uniaxe positif à axe extraordinaire vertical,
- et une zone C4 de milieu uniaxe positif d'axe extraordinaire incliné par rapport à la verticale et par rapport à la direction d'orientation des molécules sur la deuxième paroi.

La figure 3 représente les angles d'inclinaison des ellipsoïdes d'indice dans un repère Oxyz où Oz est la verticale (perpendiculaire au plan de la couche mince de cristal liquide), Ox est la direction d'orientation des molécules sur la première paroi, et Oy est la direction d'orientation des molécules sur la deuxième paroi.

Les axes extraordinaires des zones C1 et C3 sont verticaux (orientation selon Oz).

La projection de l'axe extraordinaire de la zone C2 dans le plan xOy est inclinée d'un angle α par rapport à Ox; cette projection définit une direction Ov dans le plan xOy; par ailleurs, l'axe extraordinaire est incliné d'un angle β par rapport à l'axe Oz, c'est-à-dire qu'il fait un angle β par rapport à Oz dans le plan Ovz.

De la même façon, l'axe extraordinaire de la zone C4 est incliné d'un angle β par rapport à la verticale Oz et d'un angle α par rapport à la direction horizontale Oy, c'est-à-dire que la projection horizontale Ow de cet axe extraordinaire sur le plan xOy fait un angle α par rapport à Oy.

La cellule de cristal liquide peut donc être représentée par un modèle de quatre zones biréfringentes homogènes dont les paramètres importants sont les épaisseurs de zones selon Oz et les angles α et β.

On peut alors compenser les variations indésirables de biréfringence d'une manière symétrique, c'est-à-dire en compensant les deux premières zones C1, C2 par une première demi-structure de compensation formée d'un côté de la cellule et les deux dernières zones C3, C4 par une deuxième demi-structure, symétrique de la première, formée de l'autre côté de la cellule. La symétrie dont il s'agit est une symétrie par rapport à un plan horizontal pour ce qui concerne les inclinaisons β par rapport à la verticale, mais une symétrie par rapport à la bissectrice de l'angle de 90° séparant les directions de frottement des parois de la cellule, pour ce qui concerne les inclinaisons α des projections horizontales.

D'une manière générale, le principe de compensation habituel est qu'on peut compenser la biréfringence d'un milieu uniaxe positif par un milieu uniaxe négatif de même axe et introduisant le même déphasage entre polarisations croisées.

Les zones centrales C1 et C3 seront donc compensées chacune par un film contenant un hologramme de volume à franges horizontales induisant une biréfringence uniaxe négative à axe optique vertical. En effet, la biréfringence globale induite par un réseau de franges parallèles est caractérisée par un ellipsoïde des indices ayant un axe extraordinaire perpendiculaire au plan des franges, et un indice extraordinaire moyen plus faible que l'indice ordinaire. Les zones C2 et C4 seront compensées chacune par un film contenant un hologramme de volume à franges inclinées situées dans des plans perpendiculaires à l'axe de l'ellipsoïde des zones C2 ou C4 respectivement.

On peut estimer que le film holographique possède une modulation de permittivité électrique sinusoïdale de la forme :

$$\varepsilon = \varepsilon_o + \varepsilon_1 \cos[(2\pi/\lambda)x],$$

où $\varepsilon_o$ représente la permittivité normale et $\varepsilon_1$ représente le taux de modulation de l'enregistrement holographique, $\lambda$ la longueur d'onde de la modulation, et x la distance selon la direction de modulation.

Dans ce cas, on peut montrer que l'indice moyen $n_e$ pour une polarisation dans la direction de modulation est plus faible que l'indice normal $n_o$ (indice du matériau transparent non modulé) dans les directions de polarisation normales à cette direction de modulation; et l'indice extraordinaire $n_e$ est égal à la racine quatrième de $(\varepsilon_o^2 - \varepsilon_1^2)$. D'où la biréfringence uniaxe négative induite par un tel enregistrement; cette biréfringence peut être représentée par un ellipsoïde de révolution dont le petit axe, perpendiculaire aux franges, a pour longueur $n_e$, et dont les axes ordinaires ont pour longueur $n_o$.

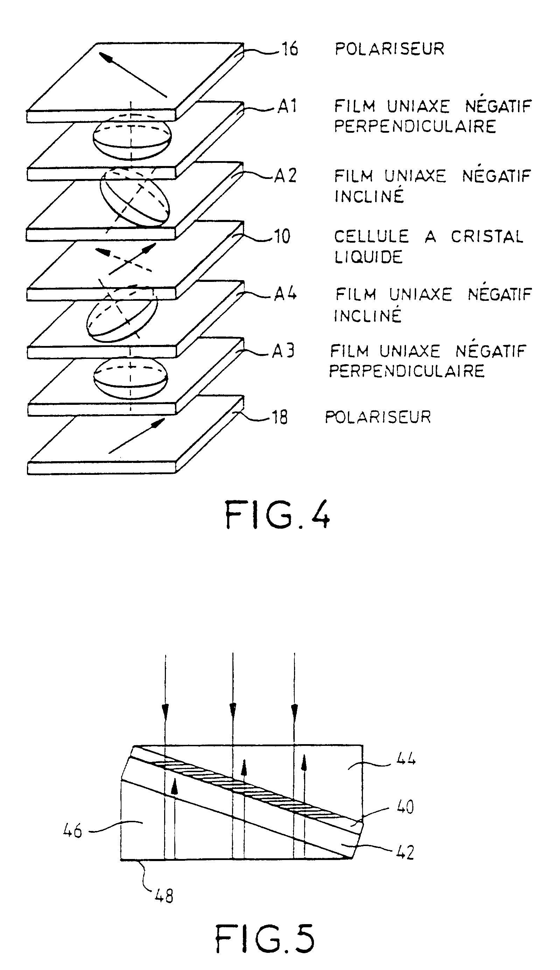

La figure 4 représente la structure globale du panneau compensé, avec un film à franges horizontales, A1 ou A3, et un film à franges inclinées (A2 ou A4) de chaque côté de la cellule à cristal liquide. Les polariseurs sont placés de part et d'autre de l'ensemble ainsi constitué. Les franges inclinées sont de préférence à 45° du plan du film. Les directions de modulation peuvent par ailleurs être obliques par rapport à la direction de frottement des parois de la cellule (selon l'angle $\alpha$ comme expliqué à propos de la modélisation de la cellule).

Le choix des épaisseurs des films de compensation résulte de calculs de retard dans le modèle de cristal liquide choisi. Le retard de phase introduit entre deux polarisations orthogonales pour un film uniaxe positif d'inclinaison déterminée est égal au produit de l'épaisseur de film traversée par la lumière, par la différence des indices vus dans les deux polarisations orthogonales. On rappelle que ces indices peuvent être calculés en faisant l'intersection de l'ellipsoïde des indices, d'axes $n_o$ et $n_e$, par un plan d'onde sous une incidence donnée. On pourra faire le calcul de déphasage pour l'incidence normale ou pour une incidence préférentielle pour laquelle on souhaite un contraste maximum. On calcule alors l'épaisseur des films pour compenser le mieux possible ce déphasage par un déphasage inverse.

On comprendra que l'on peut modéliser la cellule à cristal liquide d'autres manières, et que selon le modèle choisi, les films de compensation pourront être différents. L'invention est particulièrement intéressante parce qu'elle n'est pas limitée en ce qui concerne les inclinaisons qu'on peut donner aux franges, donc elle n'est pas limitée en ce qui concerne le choix d'un axe extraordinaire déterminé (alors qu'il est difficile d'obtenir des axes extraordinaires inclinés par d'autres méthodes).

Dans le cas particulier où on souhaiterait produire un film de compensation biréfringent uniaxe positif, on enregistrera dans le film holographique deux réseaux croisés orthogonaux, produisant deux indices moyens $n_e$ identiques dans deux directions orthogonales. L'indice dans la direction perpendiculaire restera l'indice $n_o$ normal du matériau non modulé. L'ellipsoïde des indices devient un ellipsoïde de révolution allongé, dont l'indice $n_o$ devient en fait indice extraordinaire, supérieur à l'indice moyen $n_e$ dans les deux directions de modulation, l'indice extraordinaire étant supérieur aux indices ordinaires, ce qui est caractéristique d'un milieu uniaxe positif.

Ce même résultat pourrait être obtenu en enregistrant plus de deux réseaux, dans plusieurs directions de modulation réparties dans un même plan, ces directions étant toutes orthogonales à un même axe qui devient l'axe extraordinaire du milieu uniaxe positif.

De plus, certains modèles de biréfringence de cellule électrooptique peuvent nécessiter une compensation par un film biaxe. Dans ce cas, la solution la plus avantageuse est de prévoir une double modulation holographique : on crée deux réseaux de franges indépendants, parallèles à deux plans désirés, induisant donc deux axes selon lesquels l'indice est plus petit que l'indice normal du matériau. Les plans peuvent être choisis de manière quelconque (selon les besoins de la compensation) et les indices selon ces deux axes peuvent être différents puisqu'ils dépendent de l'amplitude de la modulation de permittivité conférée au matériau. Cette amplitude dépend de l'énergie appliquée au matériau pour le moduler.

Les déphasages typiques qu'on cherche à compenser dans les cellules à cristaux liquides sont de l'ordre de 450 nanomètres pour l'ensemble de la cellule, dont une partie (par exemple la moitié) pour la partie de cellule modélisée par un axe optique vertical et l'autre partie pour la partie de cellule modélisée par un axe optique incliné.

Avec un matériau tel que de la gélatine bichromatée, d'indice environ 1,52 et subissant une modulation sinusoïdale d'amplitude 0,09 environ, on peut calculer l'indice dans l'axe perpendiculaire au plan des franges holographiques. En effet, on peut calculer que l'indice subit une modulation $n = n_o + n_1\cos(2\pi x/\lambda)$ avec $n_o = (\varepsilon_o)^{1/2}$ et $n_1 = [\varepsilon_1/2(\varepsilon_O)^{1/2}]$ dans la direction perpendiculaire aux franges, et l'indice moyen dans cette direction est alors la racine quatrième de $(n_o^4 - 4n_o^2n_1^2)$.

Pour la gélatine bichromatée, les valeurs typiques sont $n_o = 1,520$ et $n_1 = 0,09$, ce qui donne un indice extraordinaire moyen de 1,514. Pour obtenir un déphasage de 100 nanomètres il faut des épaisseurs de 15 micromètres environ, et pour 200 nanomètres il faut 30 micromètres. Ces épaisseurs peuvent facilement être obtenues pour des dépôts de gélatine photosensible.

Pour enregistrer l'hologramme de volume en franges planes parallèles, il faut faire interférer deux faisceaux de lumière monochromatique cohérente. Les franges sont créées en plans perpendiculaires à la bissectrice de l'angle formé par les deux faisceaux.

Par exemple, en envoyant un faisceau laser perpendiculairement à un miroir, le faisceau réfléchi revient parallèlement au faisceau incident et les franges se créent parallèlement au miroir. Si on veut que les franges soient obliques par rapport au plan du film, il suffit alors de placer le film obliquement par rapport au miroir.

La figure 5 représente un montage pour la formation de franges inclinées dans un film 40 de matériau à variation d'indice photoinduite (gélatine bichromatée ou autre polymère photoréfractif). Le film est porté par une plaque de verre 42 qui est placée entre deux prismes à faces obliques 44 et 46. L'onde incidente est perpendiculaire à une face du premier prisme 44; elle traverse la deuxième face, oblique, de ce prisme, puis traverse le film 40, la plaque 42, et la première face oblique du deuxième prisme 46. La deuxième face du deuxième prisme est perpendiculaire au faisceau incident et est revêtue d'une couche réfléchissante 48. Le faisceau incident interfère avec le faisceau oblique. Les franges créées dans cette configuration sont parallèles au miroir et obliques par rapport aux faces du film. D'autres configurations sont possibles.

Les franges sont créées dans le film avec un pas qui est $\Lambda/(2n)$ où $\Lambda$ est la longueur d'onde du laser d'enregistrement de l'hologramme et n l'indice du film pour la lumière d'enregistrement. Lorsqu'elles sont éclairées, en utilisation, perpendiculairement au film, le pas vu par la lumière devient $\lambda/2n\cos\alpha$, $\alpha$ étant l'obliquité des franges.

Pour que le pas des franges soit dans tous les cas inférieur à la longueur d'onde d'éclairement lors de l'utilisation, il faut que la longueur d'onde d'enregistrement soit beaucoup plus petite que la longueur d'onde d'utilisation. On enregistrera donc les franges en lumière ultraviolette (laser Argon, ou laser YAG:Nd suivi d'un tripleur de fréquence). Si l'utilisation se fait dans une gamme de longueurs d'onde visibles relativement large, il faut bien sûr que cette condition soit vérifiée aussi pour les longueurs d'onde les plus courtes de la gamme.

La longueur d'onde d'enregistrement des franges est de préférence la moitié de la longueur d'onde d'utilisation. C'est en effet dans ce cas que la biréfringence induite est maximale.

Pour l'enregistrement de deux réseaux dans le même film, on répétera l'opération en choisissant un autre angle de prisme, en faisant éventuellement tourner le film sur lui-même, et, pour une compensation biaxe, en modifiant le taux de modulation (donc l'énergie du laser employé pour l'enregistrement).

## Revendications

1. Dispositif d'affichage électrooptique comportant une structure optique de compensation des variations de biréfringence des éléments électrooptiques en fonction de l'angle d'observation, la structure de compensation comportant au moins un film (A2) transparent, **caractérisé en ce que** ledit film transparent comporte un hologramme de volume dans lequel on a inscrit un motif de franges d'interférences donnant au film des propriétés de biréfringence, les franges d'interférence faisant un angle non nul avec le plan du film pour produire une biréfringence d'axe optique non perpendiculaire au plan du film, pour compenser les effets néfastes de la biréfringence naturelle des éléments électrooptiques

2. Dispositif selon la revendication 1, **caractérisé en ce que** le dispositif est conçu pour fonctionner avec une compensation pour une gamme de longueurs d'onde déterminée, et **en ce que** les franges sont espacées d'un pas inférieur aux longueurs d'onde de cette gamme.

3. Dispositif selon l'une des revendications 1 et 2, **caractérisé en ce que** les franges sont obliques par rapport au plan du film.

4. Dispositif selon l'une des revendications 1 à 3, **caractérisé en ce que** le film comporte deux réseaux de franges mélangées, perpendiculaires à des directions différentes.

5. Dispositif selon la revendication 4, **caractérisé en ce que** les deux réseaux sont perpendiculaires entre eux.

6. Dispositif selon l'une des revendications 1 et 2, **caractérisé en ce que** la biréfringence induite par l'hologramme du film est une biréfringence uniaxe négative.

7. Dispositif selon l'une des revendications 1 et 2, **caractérisé en ce que** la biréfringence induite par l'hologramme est une biréfringence biaxe.

8. Dispositif selon l'une des revendications 1 et 2, **caractérisé en ce que** la biréfringence induite par l'hologramme est une biréfringence uniaxe positive.

9. Dispositif selon l'une des revendications 1 et 2, **caractérisé en ce qu'**il comporte au moins un film avec enregistrement holographique induisant une biréfringence négative dans un axe perpendiculaire au plan du film et un autre film avec enregistrement holographique induisant une biréfringence négative dans un axe incliné par rapport au plan du film et par rapport à la normale au film.

10. Dispositif selon la revendication 9, **caractérisé en ce que** l'angle d'inclinaison de l'axe incliné est d'environ 45°.

**Patentansprüche**

1. Elektrooptische Anzeigevorrichtung, die eine optische Struktur zur Kompensation von Doppelbrechungsänderungen von elektrooptischen Elementen in Abhängigkeit vom Beobachtungswinkel umfaßt, wobei die Kompensationsstruktur wenigstens einen lichtdurchlässigen Film (A2) umfaßt, **dadurch gekennzeichnet, daß** der lichtdurchlässige Film ein Volumenhologramm enthält, in das ein Interferenzstreifenmuster geschrieben worden ist, das dem Film Doppelbrechungseigenschaften verleiht, wobei die Interferenzstreifen mit der Ebene des Films einen von null verschiedenen Winkel bilden, um eine Doppelbrechung mit zur Ebene des Films nicht senkrechter optischer Achse zu erzeugen, um störende Wirkungen der natürlichen Doppelbrechung der elektrooptischen Elemente zu kompensieren.

2. Vorrichtung nach Anspruch 1, **dadurch gekennzeichnet, daß** die Vorrichtung so beschaffen ist, daß sie mit einer Kompensation für einen bestimmten Wellenlängenbereich arbeitet, und daß die Streifen um eine Schrittweite beabstandet sind, die kleiner als die Wellenlängen dieses Bereichs ist.

3. Vorrichtung nach einem der Ansprüche 1 und 2, **dadurch gekennzeichnet, daß** die Streifen in bezug auf die Filmebene schräg sind.

4. Vorrichtung nach einem der Ansprüche 1 bis 3, **dadurch gekennzeichnet, daß** der Film zwei vermischte Streifengitter enthält, die zu verschiedenen Richtungen senkrecht sind.

5. Vorrichtung nach Anspruch 4, **dadurch gekennzeichnet, daß** die beiden Gitter zueinander senkrecht sind.

6. Vorrichtung nach einem der Ansprüche 1 and 2, **dadurch gekennzeichnet, daß** die durch das Hologramm des Films eingeführte Doppelbrechung eine negative, einachsige Doppelbrechung ist.

7. Vorrichtung nach einem der Ansprüche 1 und 2, **dadurch gekennzeichnet, daß** die durch das Hologramm eingeführte Doppelbrechung eine zweiachsige Doppelbrechung ist.

8. Vorrichtung nach einem der Ansprüche 1 und 2, **durch gekennzeichnet, daß** die durch das Hologramm eingeführte Doppelbrechung eine positive, einachsige Doppelbrechung ist.

9. Vorrichtung nach einem der Ansprüche 1 und 2, **dadurch gekennzeichnet, daß** sie wenigstens einen Film mit holographischer Aufzeichnung, die längs einer in bezug auf die Filmebene senkrechten Achse eine negative Doppelbrechung einführt, und einen weiteren Film mit holographischer Aufzeichnung, der längs einer in bezug auf die Filmebene und in bezug auf die Normale des Films geneigten Achse eine negative Doppelbrechung einführt, umfaßt.

10. Vorrichtung nach Anspruch 9, **dadurch gekennzeichnet, daß** der Neigungswinkel der geneigten Achse etwa 45° beträgt.

**Claims**

1. Electrooptic display device having an optical structure which compensates for the variations in birefringence of the electrooptic elements as a function of the viewing angle, the compensation structure comprising at least one transparent film (A2), **characterized in that** the said transparent film has a volume hologram in which a pattern of interference fringes has been recorded, giving the film birefringence properties, the interference fringes making a non-zero angle with the plane of the film in order to produce birefringence with an optical axis not perpendicular to the plane of the film, tending to compensate for the undesirable effects of the natural birefringence of the electrooptic elements.

2. Device according to Claim 1, **characterized in that** the device is designed to operate with compensation for a defined range of wavelengths and **in that** the fringes are separated by a spacing of less than the wavelengths of this range.

3. Device according to either of Claims 1 and 2, **characterized in that** the fringes are oblique with respect to the plane of the film.

4. Device according to one of Claims 1 to 3, **characterized in that** the film has two gratings of mixed fringes, perpendicular to different directions.

5. Device according to Claim 4, **characterized in that** the two gratings are mutually perpendicular.

6. Device according to either of Claims 1 and 2, **characterized in that** the birefringence induced by the hologram of the film is a negative uniaxial birefringence.

7. Device according to either of Claims 1 and 2, **characterized in that** the birefringence induced by the hologram is a biaxial birefringence.

8. Device according to either of Claims 1 and 2, **characterized in that** the birefringence induced by the hologram is a positive uniaxial birefringence.

9. Device according to either of Claims 1 and 2, **characterized in that** it comprises at least one film with holographic recording which induces a negative birefringence along an axis perpendicular to the plane of the film and another film with holographic recording which induces a negative birefringence along an axis which is inclined with respect to the plane of the film and with respect to the normal to the film.

10. Device according to Claim 9, **characterized in that** the angle of inclination of the inclined axis is approximately 45°.

ÉTAT NON ACTIVÉ
a)

ÉTAT ACTIVÉ
b)

FIG.1

BIRÉFRINGENT UNIAXE POSITIF INCLINÉ — C2

BIRÉFRINGENT UNIAXE POSITIF VERTICAL — C1

BIRÉFRINGENT UNIAXE POSITIF VERTICAL — C3

BIRÉFRINGENT UNIAXE POSITIF INCLINÉ — C4

FIG.2

FIG.3

16  POLARISEUR

A1  FILM UNIAXE NÉGATIF
    PERPENDICULAIRE

A2  FILM UNIAXE NÉGATIF
    INCLINÉ

10  CELLULE A CRISTAL
    LIQUIDE

A4  FILM UNIAXE NÉGATIF
    INCLINÉ

A3  FILM UNIAXE NÉGATIF
    PERPENDICULAIRE

18  POLARISEUR

FIG.4

FIG.5